# FASCICULE DE BREVET EUROPEEN

(11) **EP 4 185 521 B1**
(45) Date de publication et mention de la délivrance du brevet: **11.09.2024**
(21) Numéro de dépôt: 21755006.0
(22) Date de dépôt: 15.07.2021
(51) Int. Cl.: B64C 11/06, F04D 29/32, F04D 29/34, F04D 29/64

(54) **TURBOMACHINE D'AERONEF COMPORTANT DES AUBES D'HELICE A CALAGE VARIABLE**
FLUGZEUGTURBINENTRIEBWERK MIT VERSTELLPROPELLERSCHAUFELN
AIRCRAFT TURBINE ENGINE COMPRISING VARIABLE-PITCH PROPELLER BLADES

(30) Priorité: 24.07.2020 FR 2007809; 24.07.2020 FR 2007812; 15.03.2021 FR 2102546
(43) Date de publication de la demande: 31.05.2023
(73) Titulaire: SAFRAN AIRCRAFT ENGINES, 75015 Paris (FR)
(72) Inventeur: COTTET, Clément, 77550 MOISSY-CRAMAYEL (FR); COURTIER, Vivien Mickaël, 77550 MOISSY-CRAMAYEL (FR); JOUDON, Vincent, 77550 MOISSY-CRAMAYEL (FR); LANGLOIS, Arnaud, 77550 MOISSY-CRAMAYEL (FR); SERVANT, Régis Eugène Henri, 77550 MOISSY-CRAMAYEL (FR); JABLONSKI, Laurent, 77550 MOISSY-CRAMAYEL (FR)
(74) Mandataire: Gevers & Orès
(86) Numéro de dépôt international: PCT/FR2021/051312
(87) Numéro de publication internationale: WO 2022/018355

(56) Documents cités:
- FR-A1- 3 005 683
- US-A1- 2018 290 728

## Description

### Domaine technique de l'invention

La présente invention concerne le domaine des turbomachines d'aéronef et en particulier des hélices propulsives de ces turbomachines qui comportent des aubes à calage variable.

### Arrière-plan technique

Une hélice de turbomachine d'aéronef peut être carénée, comme c'est le cas d'une soufflante par exemple, ou non carénée comme c'est le cas d'une architecture du type open-rotor par exemple.

Une hélice comprend des aubes qui peuvent être à calage variable. La turbomachine comprend alors un mécanisme permettant de modifier l'angle de calage des aubes afin d'adapter la poussée générée par l'hélice en fonction des différentes phases de vol.

La conception d'une aube d'hélice met en jeu plusieurs disciplines dont les objectifs sont généralement antagonistes. Elle doit permettre des performances aérodynamiques optimales (c'est-à-dire fournir une poussée en maximisant le rendement), garantir une tenue mécanique de l'aube (c'est-à-dire tenir les contraintes mécaniques résultant des chargements statiques et dynamiques) tout en limitant la masse ainsi que la signature acoustique. En particulier, l'amélioration des performances aérodynamiques de l'hélice tend vers une augmentation du BPR (*By Pass Ratio*), ce qui se traduit par une augmentation de son diamètre externe et donc de l'envergure des aubes.

Dans le même temps, sur certaines architectures de turbomachine, le démarrage moteur est effectué à un calage très ouvert, dit en drapeau. En effet, cette position de démarrage permet de consommer la puissance par le couple ce qui assure la sécurité machine en garantissant des régimes d'hélice faibles. Plus précisément, selon des considérations simples, la puissance est proportionnelle au produit du régime et du couple. Or, le couple est croissant avec l'incidence qui peut être augmentée via le calage. En effet, l'homme du métier en aérodynamique comprend que l'effort résultant sur un profil de pale est en première approximation perpendiculaire à la corde et peut se décomposer en deux composantes: la poussée selon l'axe moteur et la trainée de la pale dans le plan de l'hélice. Ainsi, avec l'augmentation du calage des aubes, l'effort résultant se déplace vers le plan d'hélice ce qui a pour effet d'augmenter la trainée du profil aérodynamique et de diminuer la poussée.

Par conséquent, dans le cas d'un démarrage en drapeau, la poussée générée par l'hélice est nulle, le couple est maximal et le régime minimal. Cependant, l'incidence devient tellement importante que les pales subissent alors un écoulement aérodynamique turbulent fortement décollé qui génère une forte excitation vibratoire. Cette excitation est à la fois large bande de par les petits vortex de la zone décollée, mais également intense sur certaines fréquences particulières dues aux grosses recirculations de Karman qui viennent faire osciller l'effort aérodynamique de façon importante. En particulier, sur des pales à large corde et de grande envergure qui génèrent beaucoup de trainée, cet effort est intense bien que le régime ne soit pas élevé.

Dans la technique actuelle, il est courant de fixer une aube à son support par une attache dite brochée. L'aube comprend un pied qui a une forme générale en queue d'aronde et qui est destiné à être engagé par complémentarité de formes dans une alvéole du support, cette alvéole étant classiquement réalisée par brochage. Un exemple d'un tel mode de réalisation est par exemple divulgué par le document FR 3 005 683 A1.

Pour une pale à attache brochée, cet effort aérodynamique est tellement intense qu'il peut provoquer des mouvements de solide rigide du pied d'aube dans son alvéole qui s'apparentent à du rotulage. En effet, lors d'un démarrage en drapeau, le régime réduit de la soufflante ne permet pas de générer un effort centrifuge suffisant pour empêcher ces mouvements induits par l'effort aérodynamique. Il s'en suit un endommagement par frottement de la pale et de la cale intercalée entre le pied et le fond de l'alvéole, en quelques cycles seulement. Pour les mêmes raisons, cette problématique se pose éventuellement en situation d'entraînement en roue libre (ou « *windmilling* ») suite à une panne moteur car les aubes à calage variable sont généralement équipées d'un système de rappel en drapeau.

De plus, une excitation vibratoire intense peut également survenir à des régimes de rotation beaucoup plus élevés sur les architectures non carénées à cause des effets d'installation du moteur sur l'aéronef et de la direction de l'écoulement infini amont. En effet, un moteur non caréné subit l'influence du sol et du fuselage ce qui provoque une distorsion dans l'alimentation de l'hélice, en vitesse d'écoulement, selon les azimuts moteur. Cela entraîne une réponse vibratoire des aubes d'hélice sur les premiers ordres moteurs 1N, 2N et 3N (éventuellement plus). D'autre part, en l'absence de manche d'entrée d'air, la direction de l'air qui s'écoule à travers les pales n'est pas parallèle à l'axe moteur. Cet angle de dérapage entraine des efforts dits « 1P » qui provoquent une réponse vibratoire des aubes d'hélice sur l'ordre moteur 1N. De façon similaire, ces efforts 1P peuvent également apparaître lors des phases de montées ou d'approche de l'avion car l'air s'écoule à travers les pales avec un angle d'incidence. Ces excitations vibratoires à régime de rotation élevées peuvent provoquer les mêmes endommagements par frottement évoqués ci-dessus si l'attache de l'aube n'est pas adaptée.

Pour l'ensemble de ces raisons, l'attache brochée n'est pas en l'état une solution viable pour des aubes d'hélice à calage variable, à large corde et de grande envergure.

Il existe donc un besoin d'un technologie d'attache d'une aube d'hélice à calage variable qui permette de limiter le rotulage de l'aube lors de toutes les phases de vol qui sont susceptibles d'exciter les modes vibratoires de l'aube.

En outre, il est également connu d'envelopper le pied de l'aube dans un fût qui épouse la forme du pied, généralement un fût métallique. Un tel fût permet notamment d'assurer la liaison entre le pied d'aube et la bague interne d'un palier de guidage pour permettre le calage angulaire de l'aube par rapport au moyeu. Un tel fût est fixé au pied d'aube avec de nombreuses précautions pour limiter autant que possible la création d'un rotulage entre l'aube et le fût.

Le document US 2018/0290728 A1 propose de serrer axialement un pied de pale directement entre un bol et une bague de rétention.

Cependant, quelles que soient les précautions prises, on observe souvent que l'aube peut osciller avec un certain débattement dans le fût. Il existe donc un besoin pour garantir que le rotulage de l'aube soit limité au mieux par rapport à la bague interne de palier de guidage.

### Résumé de l'invention

L'invention propose un ensemble comportant une aube d'hélice et un système de calage angulaire de l'aube, pour une turbomachine d'aéronef, l'aube présentant un pied s'étendant depuis une extrémité supérieure liée à une pale de l'aube jusqu'à une extrémité inférieure libre, le pied présentant un tronçon renflé, appelé "bulbe", le système de calage angulaire de l'aube autour d'un axe de calage comportant :
- un bol qui est délimité radialement par une paroi annulaire s'étendant autour de l'axe de calage, le bol comportant un fond inférieur fermé par une paroi de fond et une ouverture supérieure par laquelle le bulbe est destiné à être inséré axialement dans le bol ;
- une couronne de rétention annulaire qui s'étend autour du bulbe, la couronne de rétention étant au moins limitée en déplacement axial vers l'ouverture par rapport au bol, la couronne de rétention présentant une face de portée annulaire qui restreint la section de passage de l'ouverture et qui est destinée à être en contact axial avec une face supérieure du bulbe pour bloquer le déplacement axial du pied vers l'ouverture.

L'ensemble selon l'invention est caractérisé en ce qu'il comporte un siège inférieur porté par une pièce distincte de la couronne de rétention par l'intermédiaire duquel le pied est en appui axial dans le bol en direction du fond, le siège et/ou la couronne de rétention étant monté mobile en translation axiale par rapport au bol par l'intermédiaire d'au moins un mécanisme de serrage pour permettre le serrage axial du bulbe entre le siège et la face de portée de la couronne de rétention.

De cette manière, on garantit que le pied sera fixé au bol sans jeu, ce qui évitera le rotulage de l'aube dans le bol. On se différencie notamment des réalisations de l'état de la technique dans lesquelles le pied est enveloppé dans un fût rapporté.

Selon une autre caractéristique de l'ensemble réalisé selon les enseignements de l'invention, la face de portée de la couronne de rétention est directement en contact avec le bulbe et le siège est directement en contact avec le pied.

Ainsi, on garantit que le pied ne pourra pas bouger par rapport à la face de portée et au siège du fait de l'absence d'élément rapporté sur le pied, notamment du fait de l'absence de fût enveloppant le pied.

Selon une autre caractéristique de l'ensemble réalisé selon les enseignements de l'invention, la face de portée de la couronne de rétention présente une forme complémentaire de celle de la face supérieure du bulbe.

Ceci garantit une meilleure répartition de l'effort sur une plus grande surface du bulbe.

Selon une autre caractéristique de l'ensemble réalisé selon les enseignements de l'invention, la face supérieure du bulbe présente une forme globalement tronconique.

Ceci permet d'assurer un maintien aussi bien axial que radial du bulbe dans le bol.

Selon une autre caractéristique de l'ensemble réalisé selon les enseignements de l'invention, la couronne de rétention est réalisée en plusieurs secteurs.

Selon une autre caractéristique de l'ensemble réalisé selon les enseignements de l'invention, la couronne de rétention est réalisée en au moins trois secteurs.

La réalisation de la couronne de rétention en plusieurs secteurs permet de simplifier le montage du pied dans le bol.

Selon une autre caractéristique de l'ensemble réalisé selon les enseignements de l'invention, la paroi de fond est configurée pour coopérer par complémentarité de formes avec une extrémité libre du pied de façon à ce que le bol soit solidarisé en rotation avec le pied autour de l'axe de calage.

Selon une autre caractéristique de l'ensemble réalisé selon les enseignements de l'invention, le système de calage comporte en outre :
- un palier de guidage à roulement inférieur s'étendant autour de l'axe de calage et monté autour d'une partie inférieure de la paroi annulaire,
- un palier de guidage à roulement supérieur s'étendant autour de l'axe de calage et monté autour d'une partie supérieure de la paroi annulaire.

Selon une autre caractéristique de l'ensemble réalisé selon les enseignements de l'invention, au moins l'un des paliers de guidage a sa bague interne qui est intégrée au bol.

Selon une autre caractéristique de l'ensemble réalisé selon les enseignements de l'invention, le siège est monté mobile en translation axiale dans le bol par l'intermédiaire d'au moins un mécanisme de serrage.

Selon une autre caractéristique de l'ensemble réalisé selon les enseignements de l'invention, chaque mécanisme de serrage est formé par une vis axiale qui est reçue dans un taraudage complémentaire du siège, une extrémité inférieure de la vis étant en appui axial contre une face du bol tournée vers l'ouverture.

Selon une autre caractéristique de l'ensemble réalisé selon les enseignements de l'invention, le mécanisme de serrage est formé par une bague annulaire de serrage qui entoure le siège et qui est en appui axial contre une face annulaire du bol tournée vers l'ouverture, la bague de serrage comportant un filetage interne coopérant avec un filetage externe annulaire solidaire axialement du siège, l'un parmi le filetage externe ou la bague de serrage étant bloqué en rotation par rapport au bol.

Selon une autre caractéristique de l'ensemble réalisé selon les enseignements de l'invention, le filetage externe est réalisé venu de matière avec un anneau portant le siège.

Selon une autre caractéristique de l'ensemble réalisé selon les enseignements de l'invention, la couronne de rétention est montée mobile en translation axiale dans le bol par l'intermédiaire d'au moins un mécanisme de serrage.

Selon une autre caractéristique de l'ensemble réalisé selon les enseignements de l'invention, le mécanisme de serrage comporte des coins qui sont répartis autour de la couronne de rétention et qui sont intercalés entre une face d'appui tronconique de la paroi annulaire du bol tournée vers le fond et une face de butée périphérique de la couronne de rétention.

Selon une autre caractéristique de l'ensemble réalisé selon les enseignements de l'invention, le mécanisme de serrage comporte une bague de serrage qui est vissée dans le bol et qui présente une face annulaire tronconique qui sollicite le coin afin de provoquer un serrage axial vers le fond du bol de la couronne de rétention contre le bulbe.

Selon une autre caractéristique de l'ensemble réalisé selon les enseignements de l'invention, la couronne de rétention est équipée sur sa périphérie de dents externes de crabot qui coopèrent avec des dents internes de crabot complémentaire de la paroi annulaire du bol pour bloquer le déplacement axial de la couronne de rétention vers l'ouverture.

Selon une autre caractéristique de l'ensemble réalisé selon les enseignements de l'invention, la couronne de rétention est réalisée en une pièce avec le bol.

Selon une autre caractéristique de l'ensemble réalisé selon les enseignements de l'invention, le siège est monté fixe axialement par rapport au bol.

Selon une autre caractéristique de l'ensemble réalisé selon les enseignements de l'invention, une cale de réglage est intercalée axialement entre le bol et le siège.

Selon une autre caractéristique de l'ensemble réalisé selon les enseignements de l'invention, le siège est réalisé en une pièce avec le bol.

### Brève description des figures

D'autres caractéristiques et avantages de l'invention apparaîtront au cours de la lecture de la description détaillée qui va suivre pour la compréhension de laquelle on se reportera aux dessins annexés dans lesquels :
La figure 1 est une vue schématique en perspective d'une aube d'hélice pour une turbomachine d'aéronef, et illustre la présente invention,
La figure 2 est une vue à plus grande échelle d'une partie de la figure 1 et montre le pied de l'aube,
La figure 3 est une vue en coupe transversale selon le plan de coupe Pb de la figure 4 qui représente la forme et la position de l'extrémité inférieure libre du pied par rapport à l'axe de calage,
La figure 4 est une vue en coupe axiale qui représente le pied de l'aube de la figure 1 fixé dans un bol d'un système de calage réalisé selon un premier mode de réalisation de l'invention,
La figure 5 est une vue en perspective qui représente le bol de la figure 4,
La figure 6 est une vue similaire à celle de la figure 4 qui représente un deuxième mode de réalisation de l'invention,
La figure 7 est une vue similaire à celle de la figure 4 qui représente un troisième mode de réalisation de l'invention,
La figure 8 est une vue similaire à celle de la figure 4 qui représente un quatrième mode de réalisation de l'invention.
La figure 9 est une vue en perspective qui représente le pied de l'aube configuré pour être inséré dans le bol du mode de réalisation de la figure 8.
La figure 10 est une vue en coupe selon le plan de coupe 10-10 de la figure 8 qui représente la position du pied d'aube lors de son insertion dans le bol.
La figure 11 est une vue similaire à celle de la figure 10 qui représente le pied fixé sous une couronne de rétention du bol par crabotage.
La figure 12 est une vue similaire à celle de la figure 4 qui représente un cinquième mode de réalisation de l'invention.
La figure 13 est une vue similaire à celle de la figure 4 qui représente un sixième mode de réalisation de l'invention.

### Description détaillée de l'invention

Dans la suite de la description, des éléments présentant une structure identique ou des fonctions analogues seront désignés par une même référence.

Dans la suite de la description, on adoptera à titre non limitatif une orientation axiale dirigée selon l'axe "A" de calage de l'aube, du bas, à proximité du pied de l'aube, vers le haut, à proximité de l'extrémité libre de l'aube. On adoptera aussi des directions radiales s'étendent orthogonalement à l'axe de calage depuis l'intérieur, à proximité de l'axe de calage, vers l'extérieur.

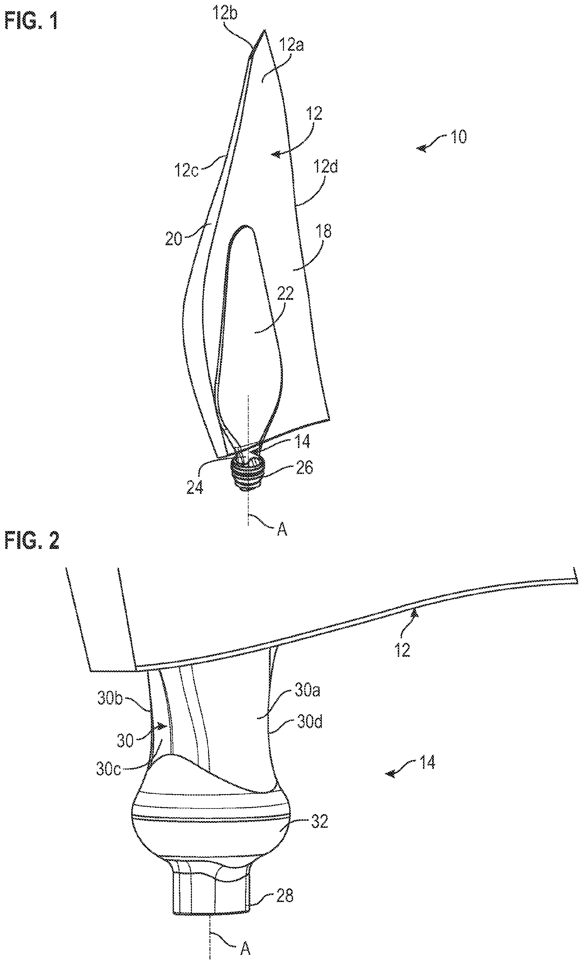

La figure 1 montre une aube 10 pour une hélice d'une turbomachine d'aéronef, cette hélice étant carénée ou non carénée.

L'aube 10 comprend une pale 12 reliée à un pied 14.

La pale 12 a un profil aérodynamique et comprend un intrados 12a et un extrados 12b qui sont reliés par un bord amont d'attaque 12c et par un bord aval de fuite 12d, les termes amont et aval faisant référence à l'écoulement des gaz autour de la pale 12 en fonctionnement.

La pale 12 a une extrémité supérieure qui est libre, appelée sommet, et une extrémité inférieure qui est reliée au pied 14.

Dans l'exemple représenté, l'aube 10 est réalisée en matériau composite par un procédé d'injection appelé procédé RTM (acronyme de l'anglais *Resin Transfer Molding*)*.* Ce procédé consiste à préparer une préforme fibreuse 18 par tissage en trois dimensions puis à disposer cette préforme dans un moule et d'y injecter une résine polymérisable telle qu'une résine époxy, qui va imprégner la préforme. Après polymérisation et durcissement de la pale 12, son bord d'attaque 12c est en général renforcé par un bouclier métallique 20 rapporté et fixé, par exemple par collage.

L'aube 10 comprend ici un longeron 22. Le longeron 22 comprend une partie formant une âme de la pale 12. La partie du longeron 22 formant l'âme de la pale 12 est destinée à être insérée dans la préforme 18 avant l'injection de résine. Le longeron 22 comprend aussi une partie qui s'étend du côté opposé au sommet de la pale 12 pour former le pied 14.

Le longeron 22 est préférentiellement en matériau composite. Il s'agit par exemple d'un matériau composite à matrice organique époxy renforcée par fibres de carbone tissées 3D avec la direction chaîne majoritairement orientée radialement et la trame majoritairement orientée selon la corde de la pale 12 à hauteur de veine aérodynamique.

En variante, le longeron peut également être formé par un assemblage plus avantageux mécaniquement de différents matériaux composites à matrice organique (thermodurcissable, thermoplastique ou élastomère) renforcés par fibres longues (carbone, verre, aramide, polypropylène) selon plusieurs arrangements fibreux (tissé, tressé, tricoté, unidirectionnel).

Bien que cela ne soit pas représenté, la pale 12 peut être creuse ou pleine et comprend une cavité interne remplie avec un matériau de remplissage du type mousse ou nid d'abeille. Ce matériau de remplissage est installé autour du longeron 22 et il est recouvert d'une peau en matériau composite à matrice organique pour augmenter la résistance de la pale 12 à l'impact.

Le bouclier 20 peut être titane ou alliage de titane, inox, acier, aluminium, nickel, etc. L'intrados 12a voire l'extrados 12b de la pale 12 peut être recouvert d'un film polyuréthane pour la protection à l'érosion.

Le pied 14 est ici dénué de fût annulaire métallique l'enveloppant.

L'axe "A" est un axe d'allongement de l'aube 10 et de la pale 12 et en particulier un axe "A" de calage de l'aube 10, c'est-à-dire l'axe autour duquel la position angulaire de l'aube 10 est ajustée. C'est en général aussi un axe radial qui s'étend donc suivant un rayon par rapport à l'axe de rotation de l'hélice équipée de cette aube 10.

Le pied 14 a une forme particulière mieux visible à la figure 2. Le pied 14 comprend pour l'essentiel trois parties à savoir :
- une extrémité 28 inférieure libre située du côté opposé à la pale 12,
- une échasse 30 supérieure située du côté de la pale 12, et
- un tronçon renflé, appelé "bulbe" 32, situé entre l'extrémité 28 libre et l'échasse 30.

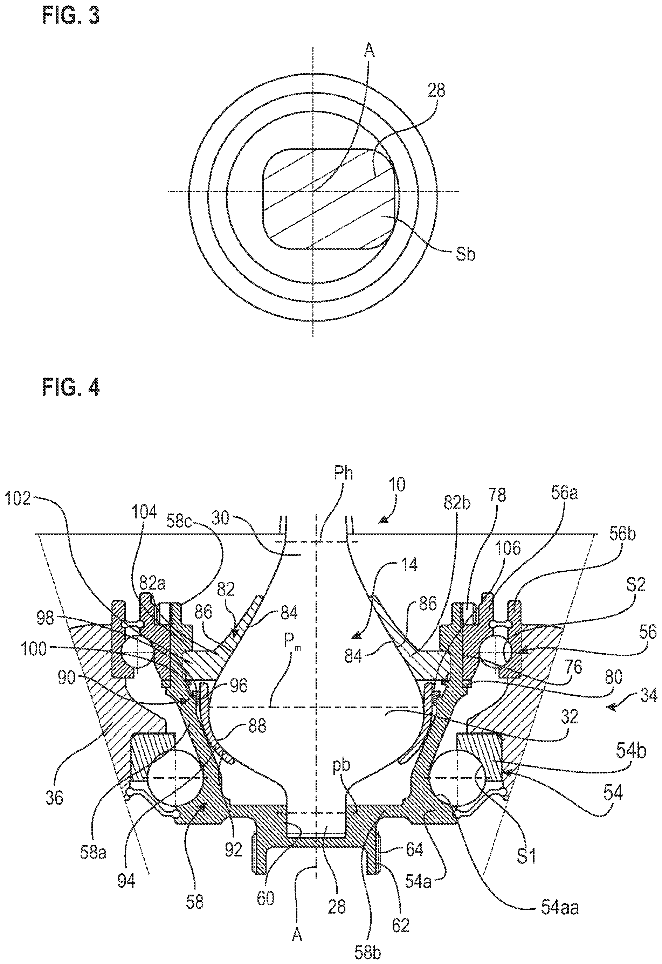

L'extrémité 28 libre a une forme générale parallélépipédique dans l'exemple représenté. Comme on peut le voir à la figure 3, cette extrémité 28 libre est désaxée ou décalée par rapport à l'axe "A" de calage pour réaliser un détrompage ou indexage, comme cela sera expliqué plus en détail dans ce qui suit.

En se référant à la figure 4, on définit Pb comme un plan transversal, c'est-à-dire un plan perpendiculaire à l'axe "A" de calage, passant sensiblement par le milieu de l'extrémité 28 libre, mesurée le long de l'axe "A" de calage. Ce plan Pb est appelé plan bas ou inférieur. La figure 3 montre la forme en section de l'extrémité 28 libre dans ce plan Pb. Cette section, appelée section basse, a une valeur ou une aire, par exemple maximale, notée Sb et a une forme générale rectangulaire dans l'exemple représenté.

Comme cela sera également décrit dans ce qui suit, l'extrémité 28 libre est configurée pour coopérer avec un système 34 de calage angulaire de l'aube 10.

En se reportant à nouveau à la figure 2, l'échasse 30 présente une forme relativement complexe qui permet de faire la transition entre le pied 14 et la partie de longeron 22 formant l'âme de la pale 12. L'échasse 30 comporte schématiquement :
- deux flancs latéraux 30a, 30b, situés respectivement du côté de l'intrados 12a et de l'extrados 12b de la pale 12, qui convergent l'un vers l'autre le long de l'axe "A" de calage et en direction du sommet de la pale 12, et
- deux bords, respectivement amont 30c et aval 30d, qui au contraire divergent l'un de l'autre le long de l'axe "A" de calage et en direction du sommet de la pale 12.

En référence à la figure 4, on définit Ph comme un plan transversal passant par l'échasse 30, et en particulier l'extrémité inférieure de l'échasse 30. Ce plan Ph est appelé plan haut ou supérieur. Dans ce plan, l'échasse 30 peut avoir en section une forme non circulaire et par exemple ovale, oblongue, carrée ou rectangulaire. Cette section, appelée section haute, a une valeur ou une aire, par exemple maximale, notée Sh.

Le bulbe 32 a une forme générale renflée ou bombée, ce renflement ou bombement s'étendant tout autour de l'axe "A" de calage.

On définit Pm comme un plan médian passant par le bulbe 32, et en particulier dans sa partie de plus grande section transversale, appelée par la suite section milieu, qui est notée Sm. Ce plan Pm est appelé plan moyen. Dans ce plan, le bulbe 32 peut avoir en section une forme circulaire bien que cette section ne soit pas limitative.

On comprend que le plan Pm est situé entre les plans Pb et Ph. Les dimensions maximales de la section transversale du bulbe 32 décroissent du plan Pm (Sm) jusqu'au plan Ph, ainsi que depuis le plan Pm, jusque vers le plan Pb. On comprend donc que Sm est supérieur à Sb et Sh. Par ailleurs, dans l'exemple représenté, Sh est supérieur à Sb.

L'aube 10 est destinée à être montée dans un système 34 de calage angulaire permettant de modifier sa position angulaire autour de l'axe "A" de calage par rapport à un moyeu 36 de l'hélice.

A cet effet, le système 34 de calage angulaire comporte des paliers 54, 56. Les paliers 54, 56 sont ici au nombre de deux et sont respectivement un palier inférieur 54 et un palier supérieur 56.

Les paliers 54, 56 sont du type à roulement à billes. Dans l'exemple représenté, ils ont des diamètres différents et leurs billes ont également des diamètres différents.

Le palier 54 inférieur s'étend sensiblement entre les plans Pm et Pb et donc autour d'une partie inférieure du bulbe 32. Ce palier 54 inférieur présente un diamètre plus petit que le palier 56 supérieur, et ses billes ont un diamètre supérieur à celles du palier 56 supérieur.

Le palier 54 inférieur est en outre à contact oblique. Dans l'exemple représenté, les points ou surfaces d'appui des billes sur les chemins de roulement de leurs bagues 54a, 54b sont situés sur une surface tronconique S1 qui s'étend le long de l'axe "A" de calage et dont le plus grand diamètre est situé du côté du sommet de l'aube 10.

Le palier 56 supérieur s'étend sensiblement entre les plans Pm et Ph et donc autour d'une partie supérieure du bulbe 32. Le palier 56 supérieur est en outre à contact oblique. Dans l'exemple représenté, les points ou surfaces d'appui des billes sur les chemins de roulement de leurs bagues 56a, 56b sont situés sur une surface tronconique S2 qui s'étend le long de l'axe "A" de calage et dont le plus grand diamètre est situé du côté de l'extrémité 28 libre du pied 14 de l'aube 10.

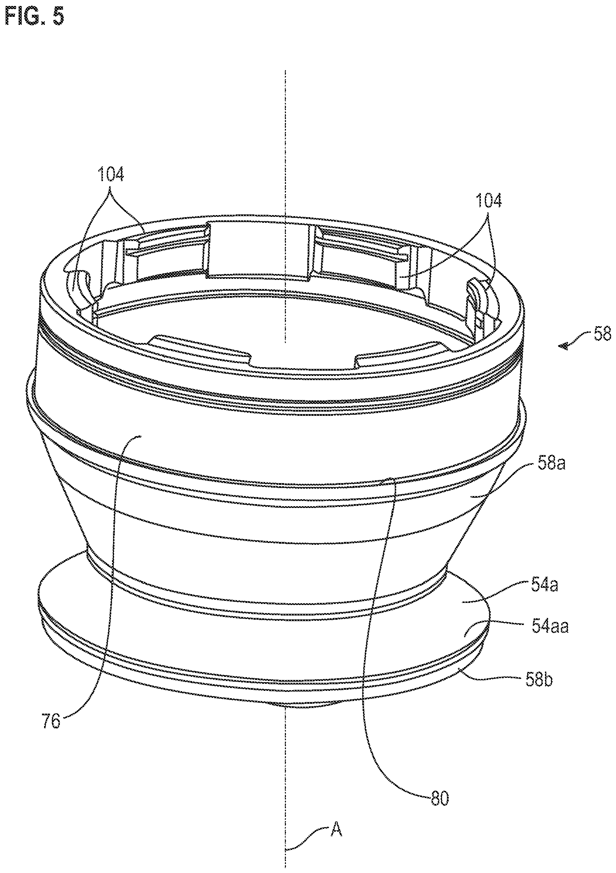

Les figures 4 et 5 illustrent un exemple de réalisation du système 34 de calage angulaire.

Le système 34 de calage angulaire comprend un bol 58. Le bol 58 comporte une paroi annulaire 58a s'étendant autour de l'axe "A" de calage. La paroi 58a annulaire délimite radialement un volume interne du bol 58. Le volume interne du bol 58 est fermé vers le bas par une paroi 58b de fond qui s'étend en regard de l'extrémité libre 28 du pied 14. Le bol 58 présente à son extrémité axiale supérieure une ouverture 58c qui est délimitée radialement par un bord d'extrémité supérieur de la paroi 58a annulaire. L'extrémité 28 libre et le bulbe 32 du pied 14 sont destinés à être insérés axialement à l'intérieur du bol 58 par l'ouverture 58c supérieure.

La paroi 58a annulaire et la paroi 58b de fond sont réalisées en une seule pièce.

La paroi 58b de fond est configurée pour coopérer par complémentarité de formes avec l'extrémité 28 libre du pied 14 de façon à ce que le bol 58 soit solidarisé en rotation avec le pied 14 autour de l'axe "A" de calage et constitue ainsi un pivot pour l'aube 10 associée.

Dans le cas présent, on comprend que la paroi 58b de fond comprend un évidement 60 ayant une section transversale non circulaire, et en particulier rectangulaire, et configurée pour recevoir l'extrémité 28 libre, comme illustré aux figures 3 et 4. Comme on le voit à la figure 2, cet évidement 60 est excentré par rapport à l'axe "A" de calage de façon analogue à l'extrémité 28 libre. Cet excentrement permet un indexage et un détrompage lors de l'insertion et du montage du pied 14 dans le bol 58, une seule position d'engagement de l'extrémité 28 libre dans l'évidement 60 étant possible.

L'évidement 60 est situé sur une face supérieure ou interne de la paroi 58b de fond du bol 58, qui est donc située à l'intérieur du bol 58 et orientée du côté du pied 14.

Le système 34 de calage angulaire génère un couple au pied 14 d'aube 10 qui s'oppose au moment de torsion issu des efforts aérodynamiques et des efforts centrifuges. Il est avantageux d'emboîter directement l'extrémité 28 libre dans l'évidement 60, sans interposition d'un élément rapporté, afin de contraindre directement la rotation du pied 14. On obtient ainsi un chemin d'effort plus direct, le moment de torsion s'appliquant directement sur le pied 14. La section basse possède des dimensions strictement inférieures à la dimension maximale de la section milieu afin de limiter l'encombrement circonférentiel à cette hauteur.

La position du tronçon milieu, le plus encombrant radialement du bulbe 32, entre les deux paliers 54, 56, est très avantageuse en termes d'encombrement radial car une partie de la hauteur de portée entre la section milieu et la section haute se situe à l'intérieur du bol 58, contrairement à l'état de l'art sur les attaches brochées intégrées dans un pivot. Cela contribue à diminuer l'encombrement radial du système 34 de calage angulaire.

Cela permet de diminuer le diamètre du palier 54 inférieur qui se situe sous la section milieu. Donc, le pied 14 d'aube 10 peut être intégré plus bas selon l'axe "A" de calage, ce qui diminue fortement le rapport de moyeu théorique associé à l'intégration du pied 14. Or, l'homme du métier sait qu'un rapport de moyeu faible améliore les performances du moteur, notamment car celui-ci est plus compact et donc plus léger. Ce dernier point est un avantage très important de la solution technique comparée à la concurrence qui propose classiquement des fûts de forme externe cylindrique.

La paroi 58b de fond comprend une face inférieure ou externe, qui est située du côté opposé au pied 14, et qui comprend un prolongement cylindrique 62 s'étendant le long de l'axe "A" de calage et comportant un filetage externe ou des cannelures rectilignes externes 64 pour l'accouplement en rotation du système 34 de calage angulaire avec un mécanisme de changement de pas qui n'est pas illustré et qui est commun aux différents systèmes 34 de calage angulaire et aubes 10 de l'hélice.

Comme on le voit à la figure 4, le bol 58 est conçu pour supporter les paliers 54, 56 qui assurent le centrage et le guidage du bol 58 autour de l'axe "A" de calage vis-à-vis du moyeu 36 de la turbomachine.

Les paliers 54, 56 peuvent faire partie du système 34 de calage angulaire. En particulier, au moins l'un des paliers de guidage peut avoir sa bague interne qui est intégrée au bol 58.

C'est ici le cas du palier 54 inférieur qui a sa bague 54a interne intégrée au bol 58. En pratique, cela signifie que le bol 58 comprend un chemin de roulement 54aa à sa périphérie externe sur laquelle roule directement les billes du palier 54 inférieur. Ce chemin de roulement comprend une surface annulaire à section incurvée concave. Ce chemin de roulement est ici située à l'extrémité inférieure du bol 58 et de la paroi 58a annulaire. La bague 54b externe du palier 54 inférieur est fixée au moyeu 36, par exemple par frettage. Par ailleurs, le bol 58 est avantageusement conçu pour appliquer une précontrainte au palier 54 inférieur.

La bague 56b externe du palier 56 supérieur est fixée au moyeu 36, par exemple par frettage. Sa bague 56a interne est engagée sur et autour de l'extrémité supérieure libre du bol 58 et de la paroi 58a annulaire. Cette extrémité de la paroi 58a annulaire comprend une surface cylindrique externe 76 de montage de la bague 56a interne ainsi qu'un filetage externe de vissage d'un écrou 78 destiné à prendre appui axialement sur la bague 56a interne pour la maintenir serrée axialement contre un épaulement cylindrique externe 80 du bol 58.

Selon les enseignements de l'invention, pour retenir axialement le pied 14 à l'intérieur du bol 58, notamment à l'encontre de la force centrifuge, il est prévu une couronne 82 de rétention annulaire qui s'étend à l'intérieur du bol 58, autour du bulbe 32. La couronne 82 de rétention est liée au bol 58 de manière à être au moins limitée en déplacement axial vers l'ouverture 58c par rapport au bol 58.

La couronne 82 de rétention présente une face 84 de portée annulaire dirigée vers le fond du bol 58. La face 84 de portée est destinée à restreindre la section de passage de l'ouverture 58c du bol 58 pour empêcher le retrait du pied 14 par l'ouverture 58c par obstacle avec le bulbe 32. Plus particulièrement, la face 84 de portée est destinée à être en contact axial avec une face 86 supérieure du bulbe 32 pour bloquer le déplacement axial du bulbe 32 vers l'ouverture 58c supérieure.

Il est par ailleurs important de fixer solidement le pied 14 dans le bol 58 afin d'éviter tout rotulage de l'aube 10 par rapport au bol 58 pendant son utilisation. A cet effet, le système 34 de calage angulaire comporte un siège 88 inférieur, formé par une face tournée vers l'ouverture 58c du bol 58, par l'intermédiaire duquel le pied 14 est en appui axial dans le bol 58 en direction du fond.

Le siège 88 appartient à une pièce distincte de la couronne 82 de rétention. Au moins l'un parmi le siège 88 et/ou la couronne 82 de rétention est monté mobile en translation axiale par rapport au bol 58 par l'intermédiaire d'au moins un mécanisme 90 de serrage pour permettre le serrage axial du bulbe 32, ici en matériau composite, entre le siège 88 et la face 84 de portée de la couronne 82 de rétention. Ainsi, cela permet d'éviter l'apparition d'un jeu axial entre la face 84 de portée et l'aube 10.

Pour qu'un tel jeu axial n'apparaisse pas, quelles que soient les conditions de fonctionnement de l'hélice, le bulbe 32 est serré entre le siège 88 et la face 84 de portée de la couronne 82 de rétention avec une précontrainte suffisamment élevée pour surpasser les efforts axiaux maximaux susceptibles d'être appliqués à l'aube 10 pendant le fonctionnement de l'hélice, par exemple de l'ordre de plusieurs dizaines de milliers de Newtons.

La couronne 82 de rétention est ici réalisée en un matériau métallique, tel que de l'acier, du titane ou un alliage de titane tel que le TA6V.

Le siège 88 est ici réalisé en un matériau métallique, tel que de l'acier, du titane ou un alliage de titane tel que le TA6V.

Pour garantir la rétention de l'aube 10 axialement dans le bol 58 sans jeu, la face 84 de portée de la couronne 82 de rétention est directement en contact avec le bulbe 32, sans interposition de pièce rapportée. La face 84 de portée de la couronne 82 de rétention présente plus particulièrement une forme complémentaire à la face 86 supérieure du bulbe 32 pour répartir les efforts sur une surface importante du bulbe 32.

Pour permettre simultanément le maintien radial du pied 14 dans le bol 58, la face 86 supérieure du bulbe 32 présente une forme globalement tronconique et la face 84 de portée présente une forme complémentaire. La face 84 de portée s'étend par exemple globalement depuis le plan médian jusqu'à l'ouverture 58c du bol 58. Ainsi, sous l'effet de la force centrifuge, le pied 14 se retrouve centré radialement dans la face 84 de portée. Cette forme permet donc d'obtenir une position stable de l'aube 10 par rapport à l'axe "A" de calage durant la rotation de l'hélice.

Par rapport à une attache brochée, l'aire de la face 84 de portée est maximisée par l'exploitation de l'ensemble de la circonférence du bas de l'aube 10. Sur une attache brochée, seules deux surfaces distinctes du pied 14 d'aube 10, respectivement situées à l'intrados et à l'extrados sont en appui sur des portées alors que les surfaces du pied 14 d'aube 10 situées au bord d'attaque et au bord de fuite sont libres. Toujours en comparaison avec une attache brochée, la hauteur des portées dans la direction de l'axe "A" de calage est bien plus importante ce qui contribue également à augmenter considérablement leur surface. Cette grande surface d'appui permet de diminuer la pression de contact quel que soit le cas de fonctionnement.

Le diamètre intérieur de la couronne 82 de rétention, mesuré à l'extrémité supérieure de la face 84 de portée, est sensiblement plus petit que le diamètre de la section milieu du bulbe 32. Pour permettre son agencement autour du bulbe 32 de manière simple, la couronne 82 de rétention est ici réalisée en plusieurs secteurs, dont deux secteurs 82a, 82b sont représentés à la figure 4. Ces secteurs 82a, 82b sont répartis régulièrement autour de l'axe "A" de calage.

Ces secteurs 82a, 82b peuvent être circonférentiellement en contact les uns avec les autres de manière que la face 84 de portée présente une forme annulaire continue.

En variante qui sera détaillée par la suite, les secteurs 82a, 82b sont écartés circonférentiellement les uns des autres de manière que la face 84 de portée présente une forme annulaire présentant des discontinuités entre deux secteurs 82a, 82b.

Le pied 14 est ici en appui sur le siège 88 par une face 92 inférieure du bulbe 32. Le siège 88 se présente ainsi sous la forme d'une face annulaire d'appui qui s'étend autour de l'axe "A" de calage. Le siège 88 épouse plus particulièrement la face 92 inférieure en vis-à-vis du bulbe 32, notamment pour permettre de réduire la pression de contact entre le siège 88 et le bulbe 32. Le siège 88 est directement en contact avec le pied 14, ici en matériau composite.

Pour permettre de centrer le bas du pied 14 dans le bol 58, la face 92 inférieure du bulbe 32 en contact avec le siège 88 présente une forme globalement tronconique, ici convexe, et le siège 88 présente une forme complémentaire. Ainsi, le pied 14 est non seulement en appui axial vers le fond du bol 58, mais il est aussi maintenu radialement en position dans le bol 58.

En variante non représentée de l'invention, le siège est en appui contre une face inférieure de l'extrémité libre du pied.

Selon un premier mode de réalisation de l'invention qui est représenté à la figure 4, le siège 88 est porté par au moins une pièce rapportée dans le bol 58. Le siège 88 est ainsi intercalé entre le pied 14 et le bol 58. Le siège 88 est monté mobile en translation par l'intermédiaire d'au moins un mécanisme 90 de serrage.

Le siège 88 est ici formé par la face supérieure d'un anneau 94 réalisé en une seule pièce. Le siège 88 est destiné à être en appui contre une face annulaire inférieure du bulbe 32. A cet égard, le siège 88 présente une forme annulaire continue centrée sur l'axe "A" de calage.

L'anneau 94 portant le siège 88 est monté en appui axial vers le fond du bol 58 par l'intermédiaire d'une bague 96 de serrage appartenant au mécanisme 90 de serrage. La bague 96 de serrage entoure le siège 88.

La bague 96 de serrage présente un rebord 98 périphérique externe qui est en appui contre une face 100 annulaire d'épaulement du bol 58. La face 100 d'épaulement s'étend radialement en saillie vers l'intérieur depuis la paroi 58a annulaire et elle est tournée vers l'ouverture 58c. Cette face d'épaulement est située légèrement au-dessus du plan médian Pm.

La bague 96 de serrage est destinée à coopérer avec l'anneau 94 pour serrer le siège 88 axialement vers le haut contre le bulbe 32 en prenant appui sur la face 100 d'épaulement. A cet effet, la bague 96 de serrage est solidaire en déplacement axial avec un filetage interne qui vient se visser sur un filetage externe complémentaire réalisé sur une face externe de l'anneau 94.

Pour permettre de réaliser le serrage du siège 88 contre le bulbe 32 en tournant la bague 96 de serrage, l'un parmi le filetage externe ou le filetage externe est bloqué en rotation par rapport au bol 58.

A titre d'exemple non limitatif, il s'agit ici du filetage interne. A cet égard, la bague 96 de serrage est immobilisée en rotation par rapport au bol 58, notamment par emboîtement de formes complémentaires entre la bague 96 de serrage et le bol 58, par exemple au moyen de méplats ou de pions.

Dans l'exemple représenté à la figure 4, le filetage externe est réalisé en une pièce avec le siège 88.

En variante non représentée, le filetage externe est formé par une bague rapportée sur l'anneau et solidaire axialement du siège. Ladite bague est par exemple montée à rotation autour de l'anneau.

Par ailleurs, la couronne 82 de rétention est ici rapportée sur le bol 58. Elle est réalisée en plusieurs secteurs 82a, 82b distincts qui sont destinés à être liés axialement au bol 58 par un dispositif de crabotage. Pour faciliter l'insertion des secteurs 82a, 82b, la couronne 82 de rétention est réalisée en au moins trois secteurs dont seulement deux sont représentés à la figure 4.

Ainsi, chaque secteur 82a, 82b comporte au moins une dent 102 externe de crabot configurée pour coopérer avec des dents 104 internes de crabot complémentaires de la paroi 58a annulaire du bol 58. Les dents 102 externes de crabot ont par exemple chacune une extension angulaire autour de l'axe "A" de calage, comprise entre 20 et 30° environ.

Les dents 104 internes de crabot du bol 58 sont mieux visibles à la figure 5. Ces dents 104 internes de crabot sont régulièrement espacées autour de l'axe "A" de calage. Elles sont au nombre de six dans l'exemple non limitatif représenté. Elles ont par exemple chacune une extension angulaire autour de l'axe "A" de calage, comprise entre 20 et 30° environ.

Les dents 102 externes de crabot sont complémentaires des dents 104 internes de crabot et sont configurées pour coopérer par crabotage avec ces dents 104 internes de crabot. Le crabotage est un mode de montage bien connu dans le domaine aéronautique qui sera décrit plus en détails par la suite.

Lors du montage de l'ensemble formé par l'aube 10 et le système 34 de calage angulaire, l'anneau 94 portant le siège 88 est tout d'abord inséré dans le bol 58 par son ouverture 58c supérieure. L'anneau 94 est préalablement vissé avec sa bague 96 de serrage de manière à ce que le siège 88 occupe sa position la plus basse dans le bol 58 lorsque la bague 96 est appuyée contre la face 100 d'épaulement. L'anneau 94 et sa bague 96 de serrage sont positionnés de manière que le rebord 98 de la bague 96 de serrage soit en appui sur la face 100 d'épaulement du bol 58.

Puis le pied 14 est inséré par son extrémité 28 libre à travers l'ouverture 58c supérieure du bol 58. Le pied 14 est positionné de panière que le bulbe 32 soit reçu en appui contre le siège 88.

Puis les secteurs 82a, 82b de la couronne 82 de rétention sont insérés dans le bol 58 par son ouverture 58c supérieure. Cette insertion est facilitée par le fait que le siège 88 occupe sa position la plus basse. Cela libère un espace suffisant pour l'insertion des dents 102 externes de crabot entre les dents 104 internes de crabot sans être gêné par le bulbe 32.

Les dents 102 externes de crabot des secteurs 82a, 82b sont agencées axialement en coïncidence avec les espaces situés angulairement entre les dents 104 internes de crabot. Puis les dents 102 externes de chaque secteur 82a, 82b sont insérée axialement vers le bas dans ces espaces de manière à être au-dessous du niveau des dents 104 internes de crabot. Enfin, les secteurs 82a, 82b sont pivotés autour de l'axe "A" de calage jusqu'à ce que les dents 102 externes de crabot soient axialement au droit des dents 104 internes de crabot. Ainsi, les secteurs 82a, 82b de couronne 82 de rétention sont limités en déplacement axial vers l'ouverture 58c par contact de leurs dents 102 externes de crabot contre les dents 104 internes de crabot du bol 58.

Ensuite, le mécanisme 90 de serrage est actionné pour permettre de serrer axialement le siège 88 contre le bulbe 32. Cela a pour effet de soulever le pied 14 par rapport au bol 58 vers son ouverture 58c supérieure, jusqu'à ce que le bulbe 32 soit en appui axial contre la face 84 de portée de la couronne 82 de rétention. Ainsi, l'effort de serrage est transmis du siège 88 au bulbe 32, puis du bulbe 32 à la couronne 82 de rétention, et de la couronne 82 de rétention au bol 58 via les dents 102, 104 de crabot. Un effort de réaction prend place entre la bague 96 de serrage et le bol 58 via la face 100 d'épaulement. Le pied 14 est ainsi uniquement en contact direct avec la face 84 de portée de la couronne 82 de rétention et avec le siège 88 de l'anneau 94.

Pour l'actionnement du mécanisme 90 de serrage, un intervalle est réservé angulairement entre au moins deux secteurs 82a, 82b de couronne 82 de rétention pour permettre l'insertion d'un outil de serrage (non représenté) par l'ouverture 58c supérieure. Le serrage est ici réalisé au moyen d'un outil comportant au moins un pignon qui est inséré dans le bol 58. Le pignon est destiné à être engrené avec une denture 106 externe portée par la périphérie du siège 88. La denture 106 externe est ici agencée juste au-dessus de la bague 96 de serrage.

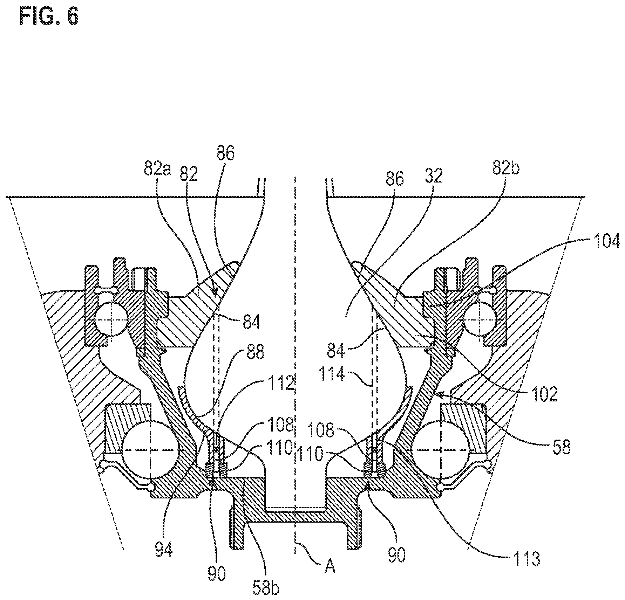

On a représenté à la figure 6 un deuxième mode de réalisation de l'invention. Ce deuxième mode de réalisation comporte de nombreux points communs avec le premier mode de réalisation. Seul le mécanisme 90 de serrage du siège 88 a été modifié par rapport au premier mode de réalisation. On ne décrira par la suite que les éléments qui diffèrent du mode de réalisation de la figure 4.

Dans cette variante de réalisation, le siège 88 est aussi porté par un anneau 94. Cependant, l'anneau 94 est ici monté sur le bol 58 par l'intermédiaire d'une pluralité de mécanismes 90 de serrage qui sont répartis régulièrement autour de l'axe "A" de calage.

Chaque mécanisme 90 de serrage comporte ici une vis 108 qui est montée à rotation dans un support 110 qui est en appui vers le bas dans le bol 58. Le support est ainsi destiné à être intimement au contact du bol 58. La vis 108 est montée fixe axialement dans le support. Une tige axiale filetée de la vis 108 est vissée dans un taraudage 113 complémentaire du siège 88 débouchant axialement vers le bas. L'extrémité inférieure de la vis 108 est en appui axial contre une face du bol 58 tournée vers l'ouverture 58c, ici la paroi 58b de fond, par l'intermédiaire du support 110.

La vis 108 est plus particulièrement montée axialement au droit du bulbe 32. Pour permettre de tourner la vis 108 dans un sens ou dans l'autre, l'extrémité supérieure de la vis 108 est munie d'une empreinte 112 susceptible de coopérer avec un tournevis présentant une empreinte complémentaire. Pour permettre l'insertion du tournevis, le bulbe 32 est muni d'orifices 114 axiaux agencés en coïncidence avec le taraudage 113 du siège 88, ledit taraudage 113 débouchant axialement vers le haut dans le siège 88. De plus, les mécanismes 90 de serrage sont agencés de manière à être situés angulairement entre deux secteurs 82a, 82b de couronne 82 de rétention pour permettre au tournevis d'accéder facilement aux orifices 114.

La rotation des vis 108 permet ainsi de soulever le siège 88, et donc le bulbe 32, par rapport au bol 58 pour venir le serrer contre la face 84 de portée de la couronne 82 de rétention.

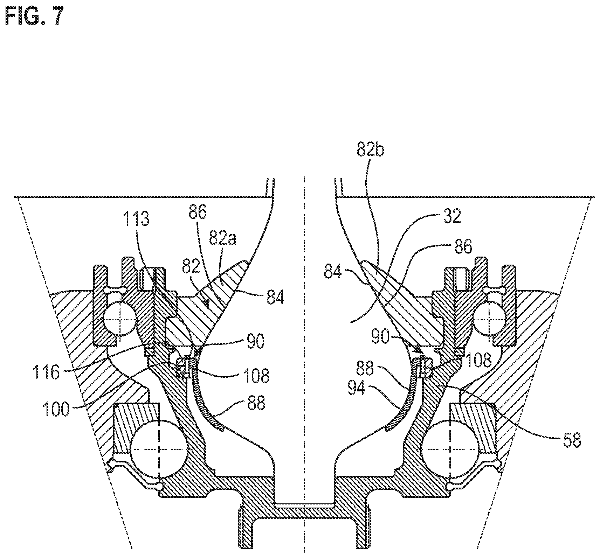

On a représenté à la figure 7 un troisième mode de réalisation de l'invention. Ce troisième mode de réalisation comporte de nombreux points communs avec le deuxième mode de réalisation. Seules les positions des mécanismes 90 de serrage du siège 88 ont été modifiées par rapport au deuxième mode de réalisation. On ne décrira par la suite que les éléments qui diffèrent du mode de réalisation de la figure 6.

Dans ce mode de réalisation, les vis 108 des mécanismes 90 de serrage sont agencées de manière à coopérer avec un taraudage 113 réalisé dans un rebord 116 périphérique externe du siège 88. Ainsi, les vis 108 prennent appui sur une face 100 d'épaulement du bol 58. La face 100 d'épaulement est ici située légèrement au-dessus du plan médian Pm. Les vis 108 ne sont donc pas agencées axialement au droit du bulbe 32. Cet agencement permet d'éviter d'avoir à réaliser des orifices de passage d'un outil dans le bulbe 32. Pour permettre le passage du tournevis, les vis 108 sont avantageusement agencées au droit d'intervalles angulaires réservés entre deux secteurs 82a, 82b de la couronne 82 de rétention.

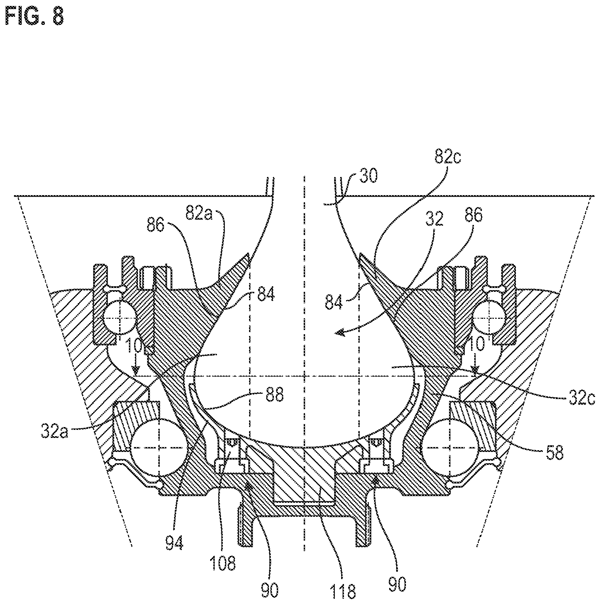

On a représenté aux figures 8 à 11 un quatrième mode de réalisation de l'invention. Ce mode de réalisation est proche du troisième mode de réalisation en ce que le siège 88 et ses mécanismes 90 de serrage sont réalisés et agencés de manière analogue. Par la suite on ne décrira que les différences entre ce quatrième mode de réalisation et le troisième mode de réalisation.

Comme représenté à la figure 8, dans ce quatrième mode de réalisation, la couronne 82 de rétention est réalisée en une seule pièce avec le bol 58.

Pour permettre l'insertion du pied 14 dans le bol 58 et son positionnement par rapport à la couronne 82 de rétention, il est prévu de conformer la couronne 82 de rétention et le pied 14 pour leur permettre de coopérer à la manière d'un dispositif de crabotage.

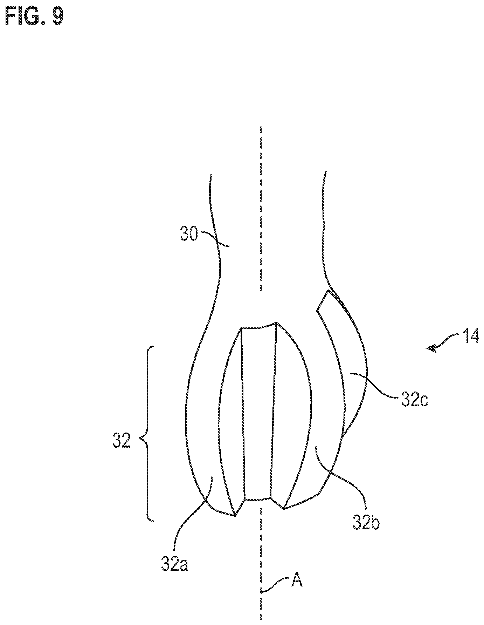

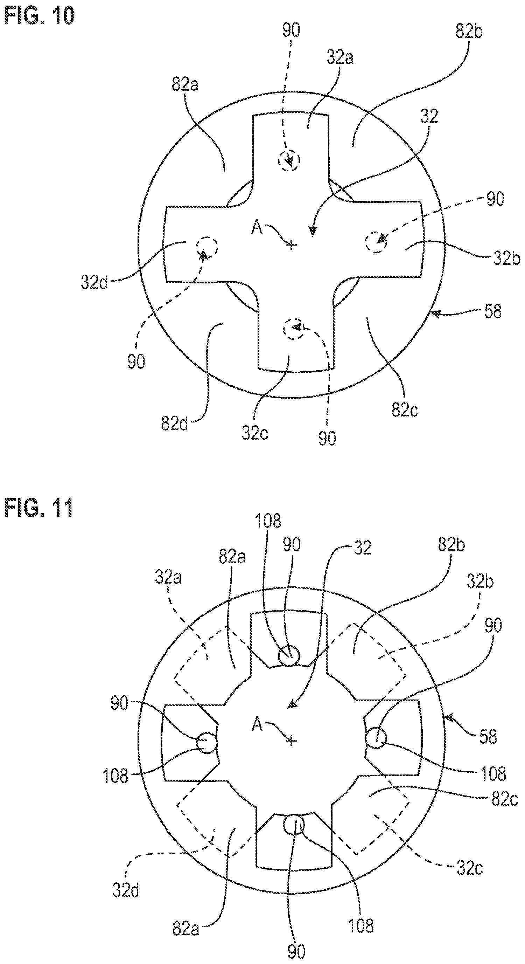

Ainsi, comme représenté aux figures 9 à 11 le bulbe 32 présente, en section transversale, un profil en forme de croix à quatre branches 32a, 32b, 32c, 32d réparties à 90° et non un profil convexe comme c'était le cas dans les autres modes de réalisation. La couronne 82 de rétention est divisée en quatre secteurs 82a, 82b, 82c, 82d séparés angulairement par des intervalles permettant l'insertion axiale des branches du bulbe 32 dans les intervalles, comme représenté à la figure 10.

Après son insertion entre les secteurs 82a, 82b, 82c, 82d de la couronne 82 de rétention, le pied 14 est pivoté angulairement autour de l'axe "A" de calage par rapport au bol 58, ici dans un sens antihoraire, pour permettre de déplacer les branches 32a, 32b, 32c, 32d axialement au droit des secteurs 82a, 82b, 82c, 82d. Ainsi, le bulbe 32 est en contact avec la face 84 de portée, ce qui empêche son retrait axial.

Dans ce mode de réalisation, le pied 14 est dénué d'extrémité inférieure libre pour permettre son pivotement par rapport au bol 58. C'est le siège 88 qui assure la liaison en rotation entre le bol 58 et le pied 14. Après serrage, le pied 14 est en effet lié en rotation avec le siège 88 par frottement. En outre, l'anneau 94 est équipé d'une protubérance 118 centrale qui est emboîtée dans l'évidement 60 du fond du bol 58 pour garantir la liaison en rotation entre le siège 88 et le bol 58.

Avantageusement, comme cela est illustré à la figure 11, les vis 108 des mécanismes 90 de serrage du siège 88 sont agencées angulairement entre deux branches du bulbe 32, et donc entre deux secteurs 82a, 82b, 82C, 82d de la couronne 82 de rétention, pour permettre l'insertion du tournevis qui permettra le serrage du siège 88 contre le bulbe 32.

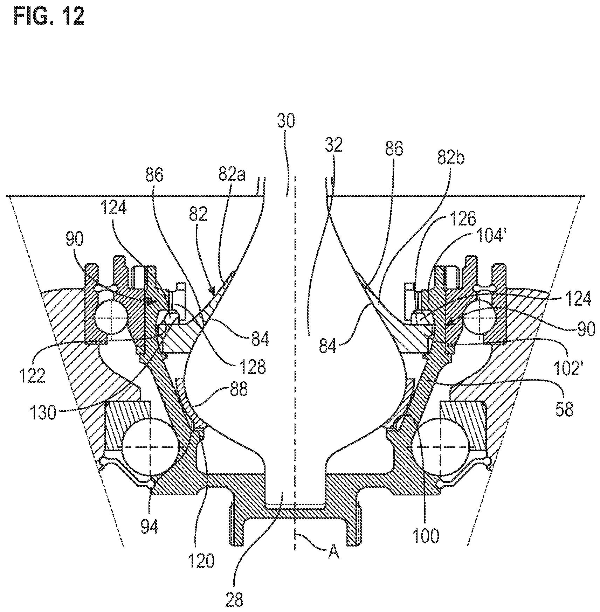

On a représenté à la figure 12 un cinquième mode de réalisation de l'invention. Contrairement aux quatre premiers modes de réalisation, c'est ici la couronne 82 de rétention qui est montée mobile en translation axiale par rapport au bol 58 par l'intermédiaire d'un mécanisme 90 de serrage, tandis que le siège 88 est ici fixe par rapport au bol 58.

Comme dans le premier mode de réalisation, la couronne 82 de rétention est réalisée en plusieurs secteurs distincts du bol 58, dont deux secteurs 82a, 82b sont ici représentés. Cependant, les secteurs 82a, 82b ne sont pas montés par crabotage dans le bol 58. A cet effet, le bol 58 comporte ici un épaulement 104' internes qui s'étend tout autour du bol 58 en continu et chaque secteur 82a, 82b de couronne 82 de rétention comporte un rebord 102' externe continu qui est destinée à être reçu au-dessous dudit épaulement 104'.

A la différence du premier mode de réalisation, le siège 88 est ici porté par un anneau 94 qui est monté fixe axialement dans le bol 58. Plus particulièrement, l'anneau 94 est reçu en appui axial sur une face 100 d'épaulement annulaire de la paroi 58a annulaire tournée vers l'ouverture 58c supérieure. Pour permettre de régler la hauteur du siège 88, il peut être prévu une cale 120 entre la face 100 d'épaulement et l'anneau 94.

Lorsque le pied 14 est reçu en appui sur son siège 88, le rebord 102' externe de chaque secteur 82a, 82b de couronne 82 de rétention est reçu au-dessous de l'épaulement' 104 interne du bol 58 avec un débattement vertical entre une position inférieure dans laquelle les faces 84 de portée sont en appui sur le bulbe 32 et une position supérieure dans laquelle les rebords 102' externes sont en butée contre l'épaulement 104' internes du bol 58.

Pour permettre le serrage des secteurs 82a, 82b de couronne 82 de rétention dans leur position inférieure, le mécanisme 90 de serrage comporte une face 122 d'appui tronconique liée au bol 58 qui est ici agencée au-dessous de l'épaulement 104' interne du bol 58. La face 122 d'appui tronconique est tournée vers la paroi 58b de fond et vers l'intérieur. Elle converge en direction de l'ouverture 58c supérieure du bol 58. Par exemple, la face d'appui tronconique est formée par la face inférieure d'une bague qui est fixée sous l'épaulement 104' interne.

En variante non représentée, la face 122 d'appui tronconique forme par exemple directement la face inférieure de l'épaulement 104' interne.

Le mécanisme 90 de serrage comporte en outre des coins 124 qui sont répartis autour de la couronne 82 de rétention. Chaque coin 124 est interposé entre la face 122 d'appui tronconique et une face 126 radiale de butée périphérique de la couronne 82 de rétention formée ici par la face supérieure du rebord 102'. Chaque coin 124 peut être formé par un segment d'anneau de section prismatique, par une bille ou par tout autre composant permettant de prendre appui simultanément de manière glissante sur la face d'appui tronconique et sur la face périphérique de butée des segments de couronne 82 de rétention.

Le mécanisme 90 de serrage comporte en outre une bague 128 de serrage qui est vissée dans le bol 58. La bague 128 de serrage entoure le bulbe 32. Elle présente un filetage externe qui coopère par vissage avec un filetage interne complémentaire qui est ici porté par la face d'extrémité interne de l'épaulement 104' interne. La bague 128 de serrage présente une face 130 annulaire tronconique de sollicitation tournée vers l'extérieur et vers le bas. La face 130 de sollicitation de la bague 128 de serrage est agencée radialement en vis-à-vis de la face 122 d'appui du bol 58. Elle sollicite chaque coin 124 radialement vers l'extérieur, en direction de la face 122 tronconique d'appui lorsque la bague 128 de serrage est vissée dans le bol 58. En réaction, les coins 124 sont poussés axialement vers le fond du bol 58 afin de provoquer un serrage axial de la couronne 82 de rétention contre le bulbe 32. Le bulbe 32 est ainsi lui-même serré contre le siège 88.

Dans ce mode de réalisation, la bague 128 de serrage est avantageusement très accessible puisqu'elle est agencée à proximité immédiate de l'ouverture 58c supérieure du bol 58, sans présence de composant susceptibles d'en réduire l'accessibilité.

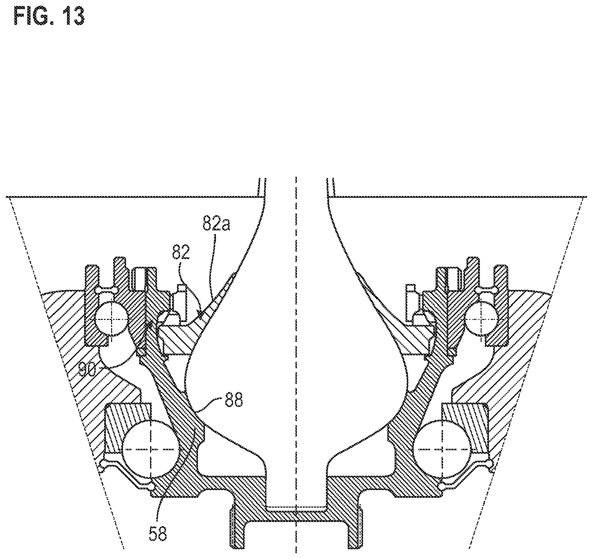

Selon une variante de réalisation de ce cinquième mode de réalisation qui est représentée à la figure 13, au lieu d'être porté par une pièce rapportée, le siège 88 est réalisé en une pièce avec le bol 58, ici avec la paroi 58a annulaire.

Bien entendu, il est possible de combiner ces différents modes de réalisation, par exemple pour obtenir un système 34 de calage angulaire comportant un siège 88 et une couronne 82 de rétention tous deux mobiles en translation axiale par l'intermédiaire de mécanismes de serrage associés.

## Revendications

1. Ensemble comportant une aube (10) d'hélice et un système (34) de calage angulaire de l'aube (10), pour une turbomachine d'aéronef, l'aube (10) présentant un pied (14) s'étendant depuis une extrémité supérieure liée à une pale (12) de l'aube (10) jusqu'à une extrémité (28) inférieure libre, le pied (14) présentant un tronçon renflé, appelé "bulbe (32)", le système (34) de calage angulaire de l'aube (10) autour d'un axe (A) de calage comportant
- un bol (58) qui est délimité radialement par une paroi (58a) annulaire s'étendant autour de l'axe (A) de calage, le bol (58) comportant un fond inférieur fermé par une paroi (58b) de fond et une ouverture (58c) supérieure par laquelle le bulbe (32) est destiné à être inséré axialement dans le bol (58) ;
- une couronne (82) de rétention annulaire qui s'étend autour du bulbe (32), la couronne (82) de rétention étant au moins limitée en déplacement axial vers l'ouverture (58c) par rapport au bol (58), la couronne (82) de rétention présentant une face (84) de portée annulaire qui restreint la section de passage de l'ouverture (58c) et qui est destinée à être en contact axial avec une face (86) supérieure du bulbe (32) pour bloquer le déplacement axial du pied (14) vers l'ouverture (58c) ; le système (34) de calage angulaire de l'aube (10) autour d'un axe (A) de calage **caractérisé en ce qu'**il comporte en plus:
- un siège (88) inférieur porté par une pièce distincte de la couronne (82) de rétention par l'intermédiaire duquel le pied (14) est en appui axial dans le bol (58) en direction du fond, le siège (88) et/ou la couronne (82) de rétention étant monté mobile en translation axiale par rapport au bol (58) par l'intermédiaire d'au moins un mécanisme (90) de serrage pour permettre le serrage axial du bulbe (32) entre le siège (88) et la face (84) de portée de la couronne (82) de rétention.

2. Ensemble selon la revendication précédente, **caractérisé en ce que** la face (84) de portée de la couronne (82) de rétention est directement en contact avec le bulbe (32) et le siège (88) est directement en contact avec le pied (14).

3. Ensemble selon l'une quelconque des revendications précédentes, **caractérisé en ce que** la face (84) de portée de la couronne (82) de rétention présente une forme complémentaire de celle de la face (86) supérieure du bulbe (32), et/ou **en ce que** la face (86) supérieure du bulbe présente une forme globalement tronconique.

4. Ensemble selon la revendication précédente, **caractérisé en ce que** la couronne (82) de rétention est réalisée en plusieurs secteurs (82a, 82b, 82c, 82d).

5. Ensemble selon l'une quelconque des revendications précédentes, **caractérisé en ce que** la paroi (58b) de fond est configurée pour coopérer par complémentarité de formes avec une extrémité (28) libre du pied de façon à ce que le bol (58) soit solidarisé en rotation avec le pied (14) autour de l'axe (A) de calage.

6. Ensemble selon l'une quelconque des revendications précédentes, **caractérisé en ce que** le système de calage comporte en outre :
- un palier (54) de guidage à roulement inférieur s'étendant autour de l'axe (A) de calage et monté autour d'une partie inférieure de la paroi (58a) annulaire,
- un palier (56) de guidage à roulement supérieur s'étendant autour de l'axe (A) de calage et monté autour d'une partie supérieure de la paroi (58a) annulaire.

7. Ensemble selon l'une quelconque des revendications précédentes, **caractérisé en ce que** le siège (88) est monté mobile en translation axiale dans le bol (58) par l'intermédiaire d'au moins un mécanisme (90) de serrage.

8. Ensemble selon la revendication précédente, **caractérisé en ce que** chaque mécanisme (90) de serrage est formé par une vis (108) axiale qui est reçue dans un taraudage (113) complémentaire du siège (88), une extrémité inférieure de la vis (108) étant en appui axial contre une face du bol (58) tournée vers l'ouverture (58c).

9. Ensemble selon la revendication 7, **caractérisé en ce que** le mécanisme (90) de serrage est formé par une bague (96) annulaire de serrage qui entoure le siège (88) et qui est en appui axial contre une face (100) annulaire du bol (58) tournée vers l'ouverture (58c), la bague (96) de serrage comportant un filetage interne coopérant avec un filetage externe annulaire solidaire axialement du siège (88), l'un parmi le filetage externe ou la bague (96) de serrage étant bloqué en rotation par rapport au bol (58).

10. Ensemble selon la revendication précédente, **caractérisé en ce que** le filetage externe est réalisé venu de matière avec un anneau (94) portant le siège (88).

11. Ensemble selon l'une quelconque des revendications précédentes, **caractérisé en ce que** la couronne (82) de rétention est montée mobile en translation axiale dans le bol (58) par l'intermédiaire d'au moins un mécanisme (90) de serrage.

12. Ensemble selon la revendication précédente, **caractérisé en ce que** le mécanisme (90) de serrage comporte des coins (124) qui sont répartis autour de la couronne (82) de rétention et qui sont intercalés entre une face (122) d'appui tronconique de la paroi (58a) annulaire du bol (58) tournée vers le fond et une face (126) de butée périphérique de la couronne (82) de rétention.

13. Ensemble selon la revendication précédente, **caractérisé en ce que** le mécanisme (90) de serrage comporte une bague (128) de serrage qui est vissée dans le bol (58) et qui présente une face (130) annulaire tronconique qui sollicite le coin (124) afin de provoquer un serrage axial vers le fond du bol (58) de la couronne (82) de rétention contre le bulbe (32).

14. Ensemble selon l'une quelconque des revendications 7 à 10, **caractérisé en ce que** la couronne (82) de rétention est équipée sur sa périphérie de dents (102) externes de crabot qui coopèrent avec des dents (104) internes de crabot complémentaire de la paroi (58a) annulaire du bol (58) pour bloquer le déplacement axial de la couronne (82) de rétention vers l'ouverture (58c).

15. Ensemble selon l'une quelconque des revendications 7 à 10, **caractérisé en ce que** la couronne (82) de rétention est réalisée en une pièce avec le bol (58).

16. Ensemble selon l'une quelconque des revendications 11 à 13, **caractérisé en ce que** le siège (88) est monté fixe axialement par rapport au bol (58).

17. Ensemble selon la revendication précédente, **caractérisé en ce qu'**une cale (120) de réglage est intercalée axialement entre le bol (58) et le siège (88).

18. Ensemble selon la revendication 16, **caractérisé en ce que** le siège (88) est réalisé en une pièce avec le bol (58).

## Patentansprüche

1. Anordnung, die eine Propellerschaufel (10) und ein System (34) zur Winkelverstellung der Schaufel (10) umfasst, für ein Turbotriebwerk eines Luftfahrzeugs, wobei die Schaufel (10) einen Fuß (14) aufweist, der sich von einem oberen Ende, das mit einem Blatt (12) der Schaufel (10) verbunden ist, bis zu einem freien unteren Ende (28) herum erstreckt, wobei der Fuß (14) einen verdickten Abschnitt aufweist, "Knolle (32)" genannt, wobei das System (34) zur Winkelverstellung der Schaufel (10) um eine Verstellachse (A) herum Folgendes umfasst:
- eine Schale (58), die radial durch eine ringförmige Wand (58a) begrenzt ist, die sich um die Verstellachse (A) herum erstreckt, wobei die Schale (58) einen unteren Boden, der durch eine Bodenwand (58b) verschlossen ist, und eine obere Öffnung (58c) aufweist, durch welche die Knolle (32) axial in die Schale (58) eingesetzt werden soll;
- einen ringförmigen Rückhaltekranz (82), der sich um die Knolle (32) herum erstreckt, wobei der Rückhaltekranz (82) in Bezug auf die Schale (58) mindestens in der axialen Bewegung zur Öffnung (58c) hin begrenzt ist, wobei der Rückhaltekranz (82) eine ringförmige Lagerfläche (84) aufweist, die den Durchgangsquerschnitt der Öffnung (58c) einschränkt und die dazu bestimmt ist, in axialem Kontakt mit einer oberen Fläche (86) der Knolle (32) zu sein, um die axiale Bewegung des Fußes (14) in Richtung der Öffnung (58c) zu blockieren; wobei das System (34) zur Winkelverstellung der Schaufel (10) um eine Verstellachse (A) **dadurch gekennzeichnet ist, dass** es weiter umfasst:
- einen unteren Sitz (88), der von einem Teil getragen wird, das sich von dem Rückhaltekranz (82) unterscheidet, mittels dessen der Fuß (14) in der Schale (58) in Richtung des Bodens axial aufliegt, wobei der Sitz (88) und/oder der Rückhaltekranz (82) in Bezug auf die Schale (58) mittels mindestens eines Klemmmechanismus (90) in axialer Translation beweglich montiert ist, um das axiale Einklemmen der Knolle (32) zwischen dem Sitz (88) und der Lagerfläche (84) des Rückhaltekranzes (82) zu ermöglichen.

2. Anordnung nach dem vorstehenden Anspruch, **dadurch gekennzeichnet, dass** die Lagerfläche (84) des Rückhaltekranzes (82) direkt mit der Knolle (32) in Kontakt ist und der Sitz (88) direkt mit dem Fuß (14) in Kontakt ist.

3. Anordnung nach einem der vorstehenden Ansprüche, **dadurch gekennzeichnet, dass** die Lagerfläche (84) des Rückhaltekranzes (82) eine Form aufweist, die komplementär zu derjenigen der oberen Fläche (86) der Knolle (32) ist, und/oder dass die obere Fläche (86) der Knolle eine insgesamt kegelstumpfförmige Form aufweist.

4. Anordnung nach dem vorstehenden Anspruch, **dadurch gekennzeichnet, dass** der Rückhaltekranz (82) in mehreren Sektoren (82a, 82b, 82c, 82d) ausgeführt ist.

5. Anordnung nach einem der vorstehenden Ansprüche, **dadurch gekennzeichnet, dass** die Bodenwand (58b) konfiguriert ist, um durch Formschlüssigkeit mit einem freien Ende (28) des Fußes zusammenzuwirken, so dass die Schale (58) drehfest mit dem Fuß (14) um die Verstellachse (A) verbunden ist.

6. Anordnung nach einem der vorstehenden Ansprüche, **dadurch gekennzeichnet, dass** das Verstellsystem weiter umfasst:
- eine Führungslagerung mit unterer Laufrolle (54), die sich um die Verstellachse (A) herum erstreckt und um einen unteren Teil der ringförmigen Wand (58a) herum montiert ist,
- eine Führungslagerung mit oberer Laufrolle (56), die sich um die Verstellachse (A) herum erstreckt und um einen oberen Teil der ringförmigen Wand (58a) herum montiert ist.

7. Anordnung nach einem der vorstehenden Ansprüche, **dadurch gekennzeichnet, dass** der Sitz (88) mittels mindestens eines Klemmmechanismus (90) in axialerTranslation beweglich in der Schale (58) montiert ist.

8. Anordnung nach dem vorstehenden Anspruch, **dadurch gekennzeichnet, dass** jeder Klemmmechanismus (90) durch eine axiale Schraube (108) ausgebildet ist, die in einem zum Sitz (88) komplementären Gewinde (113) aufgenommen ist, wobei ein unteres Ende der Schraube (108) axial gegen eine Fläche der Schale (58) aufliegt, die der Öffnung (58c) zugewandt ist.

9. Anordnung nach Anspruch 7, **dadurch gekennzeichnet, dass** der Klemmmechanismus (90) durch einen ringförmigen Klemmring (96) ausgebildet ist, der den Sitz (88) umgibt und der axial gegen eine ringförmige Fläche (100) der Schale (58) aufliegt, die der Öffnung (58c) zugewandt ist, wobei der Klemmring (96) ein Innengewinde umfasst, das mit einem ringförmigen Außengewinde zusammenwirkt, das axial fest mit dem Sitz (88) verbunden ist, wobei entweder das Außengewinde oder der Klemmring (96) in Bezug auf die Schale (58) drehfest blockiert ist.

10. Anordnung nach dem vorstehenden Anspruch, **dadurch gekennzeichnet, dass** das Außengewinde einstückig mit einem den Sitz (88) tragenden Ring (94) ausgeführt ist.

11. Anordnung nach einem der vorstehenden Ansprüche, **dadurch gekennzeichnet, dass** der Rückhaltekranz (82) mittels mindestens eines Klemmmechanismus (90) in axialer Translation beweglich in der Schale (58) montiert ist.

12. Anordnung nach dem vorstehenden Anspruch, **dadurch gekennzeichnet, dass** der Klemmmechanismus (90) Keile (124) umfasst, die um den Rückhaltekranz (82) herum verteilt sind und die zwischen einer kegelstumpfförmigen Auflagefläche (122) der dem Boden zugewandten ringförmigen Wand (58a) der Schale (58) und einer Umfangsanschlagfläche (126) des Rückhaltekranzes (82) eingefügt sind.

13. Anordnung nach dem vorstehenden Anspruch, **dadurch gekennzeichnet, dass** der Klemmmechanismus (90) einen Klemmring (128) umfasst, der in die Schale (58) eingeschraubt ist und der eine kegelstumpfförmige ringförmige Fläche (130) aufweist, die den Keil (124) belastet, um ein axiales Einklemmen des Rückhaltekranzes (82) gegen die Knolle (32) in Richtung des Bodens der Schale (58) zu bewirken.

14. Anordnung nach einem der Ansprüche 7 bis 10, **dadurch gekennzeichnet, dass** der Rückhaltekranz (82) an seinem Umfang mit äußeren Klauenzähnen (102) ausgestattet ist, die mit inneren Klauenzähnen (104) zusammenwirken, die komplementär zu der ringförmigen Wand (58a) der Schale (58) sind, um die axiale Bewegung des Rückhaltekranzes (82) in Richtung der Öffnung (58c) zu blockieren.

15. Anordnung nach einem der Ansprüche 7 bis 10, **dadurch gekennzeichnet, dass** der Rückhaltekranz (82) einstückig mit der Schale (58) ausgeführt ist.

16. Anordnung nach einem der Ansprüche 11 bis 13, **dadurch gekennzeichnet, dass** der Sitz (88) in Bezug auf die Schale (58) axial fest montiert ist.

17. Anordnung nach dem vorstehenden Anspruch, **dadurch gekennzeichnet, dass** ein Einstellkeil (120) axial zwischen der Schale (58) und dem Sitz (88) eingefügt ist.

18. Ausführung nach Anspruch 16, **dadurch gekennzeichnet, dass** der Sitz (88) einstückig mit der Schale (58) ausgeführt ist.

## Claims

1. An assembly comprising a propeller vane (10) and a system (34) for setting the pitch of the vane (10), for an aircraft turbine engine, the vane (10) having a root (14) extending from an upper end connected to a blade (12) of the vane (10) to a free lower end (28), the root (14) having a bulged stretch, referred to as "bulb (32)", the system (34) for setting the pitch of the vane (10) about a pitch axis (A), comprising:
- a cup (58) which is radially delimited by an annular wall (58a) extending around the pitch axis (A), the cup (58) comprising a lower bottom enclosed by a bottom wall (58b) and an upper opening (58c) through which the bulb (32) is intended to be inserted axially into the cup (58);
- an annular retention ring (82) extending around the bulb (32), the retention ring (82) being at least limited in axial displacement towards the opening (58c) with respect to the cup (58), the retention ring (82) having an annular bearing surface face (84) which restricts the passage cross-section of the opening (58c) and which is intended to be in axial contact with an upper face (86) of the bulb (32) to block the axial displacement of the root (14) towards the opening (58c);
the system (34) for setting the pitch of the vane (10) about a pitch axis (A) being **characterized in that** it also comprises:
- a lower seat (88) carried by a part separate from the retention ring (82) by means of which the root (14) is axially supported in the cup (58) in the direction of the bottom, the seat (88) and/or the retention ring (82) being mounted movable in axial translation with respect to the cup (58) by means of at least one clamping mechanism (90) in order to allow the axial clamping of the bulb (32) between the seat (88) and the bearing surface face (84) of the retention ring (82).

2. The assembly according to the preceding claim, **characterised in that** the bearing surface face (84) of the retention ring (82) is directly in contact with the bulb (32) and the seat (88) is directly in contact with the root (14).

3. The assembly according to any one of the preceding claims, **characterised in that** the bearing surface face (84) of the retention ring (82) has a shape complementary to that of the upper face (86) of the bulb (32), and/or **in that** the upper face (86) of the bulb has a generally frustoconical shape.

4. The assembly according to the preceding claim, **characterised in that** the retention ring (82) is produced of several sectors (82a, 82b, 82c, 82d).

5. The assembly according to any one of the preceding claims, **characterised in that** the bottom wall (58b) is configured to cooperate in a form-fitting manner with a free end (28) of the root so that the cup (58) is secured in rotation with the root (14) about the pitch axis (A).

6. The assembly according to any of the preceding claims, **characterised in that** the pitch setting system further comprises:
- a lower rolling guide bearing (54) extending around the pitch axis (A) and mounted around a lower portion of the annular wall (58a),
- an upper rolling guide bearing (56) extending around the pitch axis (A) and mounted around an upper portion of the annular wall (58a).

7. The assembly according to any of the preceding claims, **characterised in that** the seat (88) is mounted movable in axial translation in the cup (58) by means of at least one clamping mechanism (90).

8. The assembly according to the preceding claim, **characterised in that** each clamping mechanism (90) is formed by an axial screw (108) which is received in a threading (113) complementary of the seat (88), a lower end of the screw (108) being supported axially against a face of the cup (58) turned towards the opening (58c).

9. The assembly according to claim 7, **characterised in that** the clamping mechanism (90) is formed by an annular clamping ring (96) which surrounds the seat (88) and which is in axial support against an annular face (100) of the cup (58) turned towards the opening (58c), the clamping ring (96) comprising an internal thread cooperating with an annular external thread which is axially secured to the seat (88), one of the external thread or the clamping ring (96) being blocked in rotation with respect to the cup (58).

10. The assembly according to the preceding claim, **characterised in that** the external thread is produced integral with a seat ring (94) carrying the seat (88).

11. The assembly according to any one of the preceding claims, **characterised in that** the retention ring (82) is mounted movable in axial translation in the cup (58) by means of at least one clamping mechanism (90).

12. The assembly according to the preceding claim, **characterised in that** the clamping mechanism (90) comprises wedges (124) which are distributed around the retention ring (82) and which are interposed between a frustoconical face (122) for supporting the annular wall (58a) of the cup (58) turned towards the bottom and a peripheral stop face (126) of the retention ring (82).

13. The assembly according to the preceding claim, **characterised in that** the clamping mechanism (90) comprises a clamping ring (128) which is screwed into the cup (58) and which has a frustoconical annular face (130) which bias the wedge (124) in order to cause an axial clamping towards the bottom of the cup (58) of the retention ring (82) against the bulb (32).

14. The assembly according to any one of claims 7 to 10, **characterised in that** the retention ring (82) is equipped on its periphery with external dog teeth (102) which cooperate with complementary internal dog teeth (104) of the annular wall (58a) of the cup (58) in order to block the axial displacement of the retention ring (82) towards the opening (58c).

15. The assembly according to any one of claims 7 to 10, **characterised in that** the retention ring (82) is produced integrally with the cup (58).

16. The assembly according to any one of claims 11 to 13, **characterised in that** the seat (88) is mounted axially stationary with respect to the cup (58).

17. The assembly according to the preceding claim, **characterised in that** a setting shim (120) is interposed axially between the cup (58) and the seat (88).

18. The assembly according to claim 16, **characterised in that** the seat (88) is produced integrally with the cup (58).
